# EUROPÄISCHE PATENTANMELDUNG

(11) **EP 0 990 835 A1**
(43) Veröffentlichungstag der Anmeldung: **05.04.2000**
(21) Anmeldenummer: 98123880.1
(22) Anmeldetag: 16.12.1998
(51) Int. Cl.: F16P 3/08

(54) **Vorrichtung für eine besonders sichere Positionsüberwachung (z.B. Tür geschlossen Position)**

(30) Priorität: 01.10.1998 CH 199298
(71) Anmelder: Vondracek, Georg, 600 Luzern (CH)
(72) Erfinder: Vondracek, Georg, 600 Luzern (CH)

(57) **Zusammenfassung**

Eine Vorrichtung für sichere Ueberwachung (z.B. der Türflügelposition) besteht aus zwei oder mehreren (Licht-)Wellenleitern (3) und einer Auswerteelektronik. Die (Licht-)Wellenleiter (3) befinden sich im Inneren von mechanischen Teilen (1,2), welche gegeneinander beweglich sind.(z.B. Scharniere, Riegelbolzen usw.) In einer bestimmten Position dieser Teile (1,2) kann die (Licht-)Welle durchgehen und wie durch die Auswerteelektronik detektiert. Dadurch lässt sich feststellen, ob sich die einzelnen Teile in einer bevorzugten Position befinden; z.B. Türflügel in der geschlossenen Position. Die Ausführung ist sehr sicher, sogar falls in der Vorrichtung Bauteildefekte passieren, wird immer abgeschaltet. Sie lässt sich nicht einfach überlisten, und die Teile mit (Licht-)Wellenleitern können sogar im ex-geschützten Bereich gefahrlos eingesetzt werden.

## Beschreibung

### Titel der Erfindung

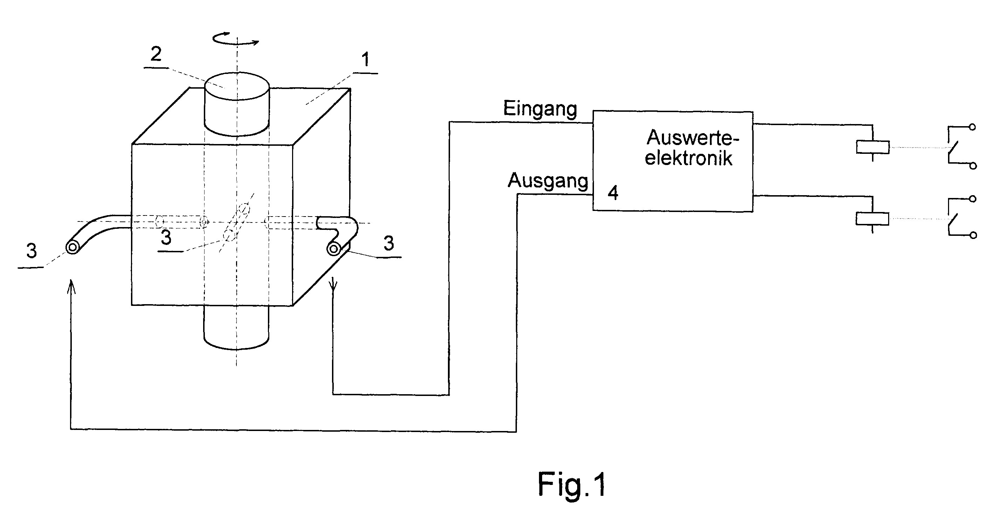

Die Erfindung betrifft eine mechanische oder elektromechanische oder anders angetriebene Vorrichtung (Fig. 1), welche mindestens aus zwei gegeneinander beweglichen Teilen ((1, 2) besteht und im Inneren der Teile Wellenleiter [z.B. Lichtwellenleiter (3)] beinhaltet. Diese sind so angeordnet, dass in einer (eventuell mehreren) bestimmten Position die Lichtwellen durch alle Teilwellenleiter durchkommen und detektiert werden (Position EIN). In den übrigen Positionen (AUS) ist der (Licht)-Wellendurchfluss zwangsläufig unterbrochen.
Die Auswerteelektronik (4) sendet ununterbrochen "Telegramme' mit redundant-kodierten Adressen und einer Positionsangabe. Diese werden auf die (Licht-)Welle aufmoduliert. Bei der "EIN" Position der mechanischen Teile, gelangen diese Telegramme bis zur Auswerteelektronik und werden wieder in eletrische Signale umgewandelt und an einen Bus, falls vorhanden, weitergeleitet oder direkt, nach einer zweikanaligen Dekodierung, den Ausgangsrelais zugeführt.
- **Anwendung:**: In der Sicherheitstechnik ((Safety and Security) mit sehr sicherer und zuverlässigen Arbeitsweise.

### Detaillierte Darstellung der Erfindung

Die Erfindung besteht aus:

### a) mechanischen Teilen mit (Licht-)Wellenleitern (Wellenführungen im Inneren der Teile)

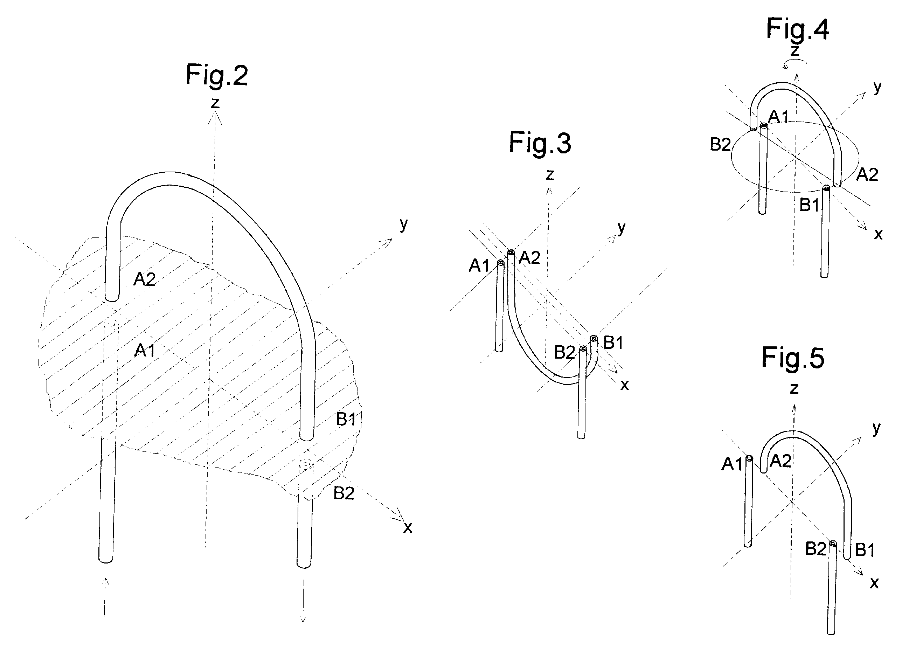

### Die prinizipiellen Varianten (Fig 2 bis Fig.5)

Es handelt sich um mechanische Teile, welche sich gegeneinander bewegen können. In einer Position z.B. können sich die (Licht-)Wellen frei vom Sender bis zum Empfänger verbreiten. Wird ein Teil gegenüber dem anderen verschoben oder verdreht, (absolut oder relativ), wird die Feldintensität geschwächt bis unterbrochen. Es erfolgt eine Zwangsunterbrechung. (Zwangsunterbrechung ist besonders zuverlässig; Analogie mit Zwangsunterbrechung des elektrischen Stromes).

### Die Position "EIN" (Fig.2)

Die (Licht)-Signale werden in der Auswerteeinheit produziert. Sie kommen zu A1, dann direkt ins A2, über den Bogen zurück zu B1 und B2. Dann werden sie in die Auswerteelektronik zurückgeführt

### Einige, aber nicht alle möglichen Varianten für die Position "AUS". ( Fig. 3, 4, 5)

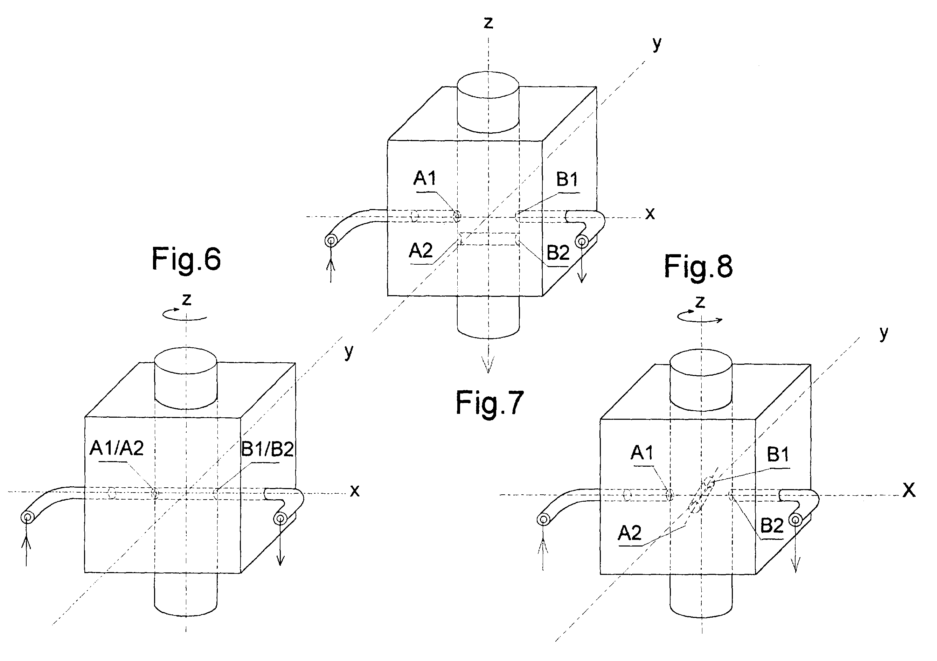

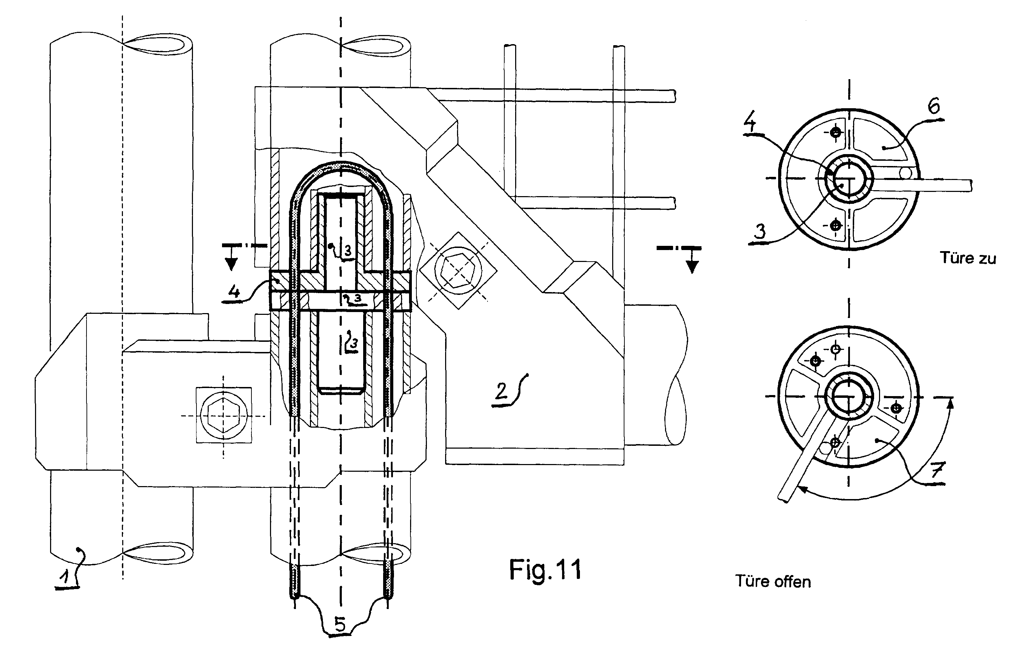

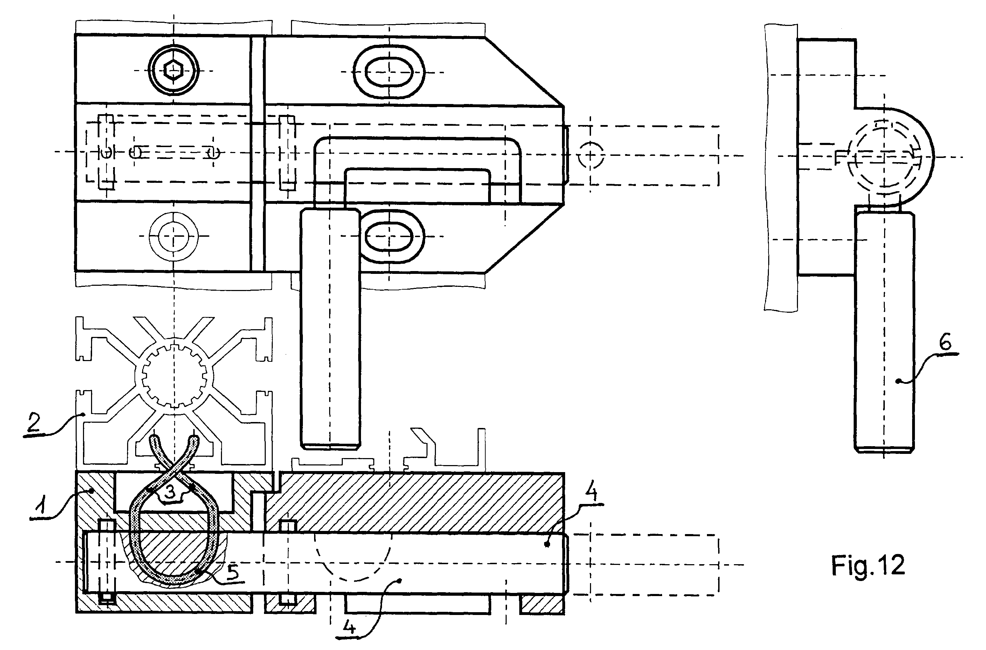

- **Lösung 1 (Fig. 3):**: Schwenken des Bogens um Achse X
Trennung erfolgt sobald A1 und A2 sowie
B1 und B2 nicht mehr axial gegenüber stehen.
Anwendung: z.B. Scharniere (Fig. 11)
- **Lösung 2 (Fig. 4):**: Drehen des Bogens um Achse Z
Drehwinkel = ca. 170°, dann würde wieder eine Einschaltung erfolgen
Trennung erfolgt bei einer leichten Versetzung des Bogens
aus der Ebene Z / X
Anwendung: z.B. Scharniere oder Zähler der Umdrehungen (Fig. 6 und 8)
- **Lösung 3 (Fig. 5):**: Verschieben des Bogens auf der Achse X
Weg: beliebig lang
Anwendung: z.B. Riegelbolzen (Fig. 12) und Schiebetüren
- **Lösung 4 (Fig. 6,7,8):**: Verschieben des Wellenleiters in der Richtung der Achse Z oder drehen in der Ebene X / Y. Statt einem Bogen es kann auch ein anders gestallteten (z.B. ein geradelinigen) Lichtwellenleiter angewendet werden.
Anwendung: Drehtüre, Schiebetüre, Zähler der Umdrehungen

### Beispiele der Konstruktion:

### - Türscharnier (Fig. 11)

Die Tür besteht aus einem Rahmen (1) und einem beweglichen Tür-Flügel (2).
Der Scharnier besteht aus einem Stahldorn (3) und einem nylon Gegenstück (4)
Im Stahldorn befinden sich zwei Bohrungen, in welchen die (Licht-)wellenleiterstücke (Zu- und Ableitung)(5) befestigt sind.
Im nylon Gegenstück sind auch zwei Bohrungen in welchen der U-Wellenleiterstück befestigt ist.
Bei geschlossener Tür sind alle Enden der (Licht-)Wellenleiter koaxial angeordnet, deshalb EIN-Position (6).
Ist die Tür geöffnet, ist die Wellenübertragung unterbrochen (AUS-Position) (7)

### - Riegelbolzen (Fig. 12)

Für eine Schiebetür wird ein Riegelbolzen verwendet. Der Riegelbolzen besteht aus einem festen Teil (1), welcher auf dem Rahmen (2) befestigt ist. Im Teil (1) sind zwei (Licht-)Wellenleiter (Zu- und Ableitung) eingebaut (3). Im Bolzen selbst (4) ist ein U-formiger (Licht-)Wellenleiter-Gegenstück eingebaut (5).
Nach dem Einschieben des Bolzens (4) und dessen Verriegelung in die Position (6) sind alle Enden der (Licht-)Wellenleiter in der koaxialen Position (EIN-Position).

### b) einer Auswerteelektronik

Die Auswerteelektronik kann auf verschiedenste Art und Weise konzipiert werden.
Charakteristisch ist jedoch, dass sie mit einer Schaltungsredundanz und/oder Codenredundanz ausgeführt wird, wenn es sich um sicherheitstechnische (Safety)-Anwendungen handelt. Bei Sicherheits nicht relevanten Anwendungen (=Security) muss die Schaltung und Code nicht redundant sein.

### Bemerkung:

Redundanz bedeutet Anwendung von mehr Bauteilen bzw. mehr Informationen, als es für die reine Ausführung der Funktion selbst notwendig wäre. (Manche Fachleute verstehen unter der Redundanz nur eine mehrkanalige Bearbeitung der gleichen Information.)

Dank der Redundanz kann die Elektronik besonders sicher wirken, d.h. die Wirkung, also die Uebertragung der Sicherheitsfunktion ist auch dann gewährleistet, wenn ein oder zwei oder mehrere Fehler in der Schaltung oder im Code passieren. (Hamming-Distanz ist wählbar).

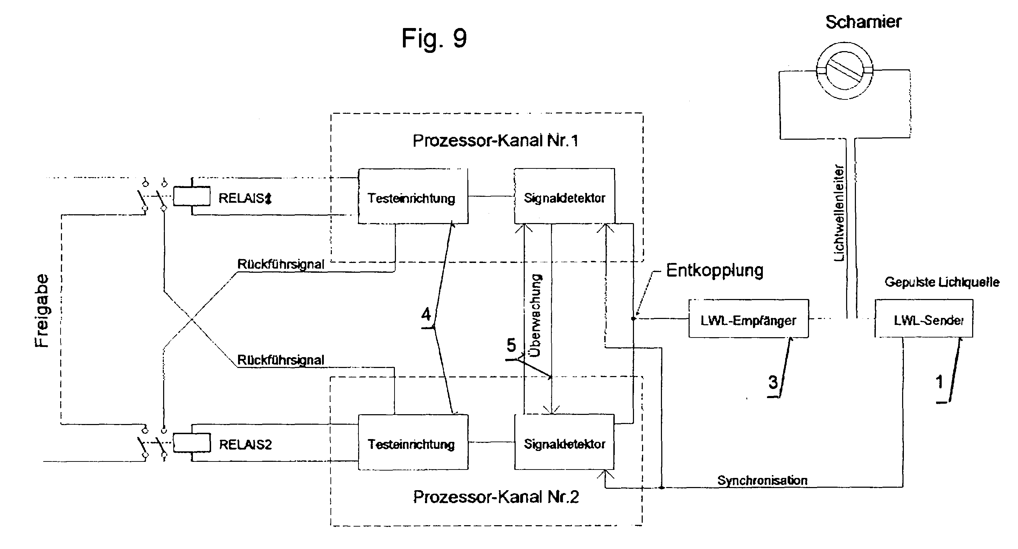

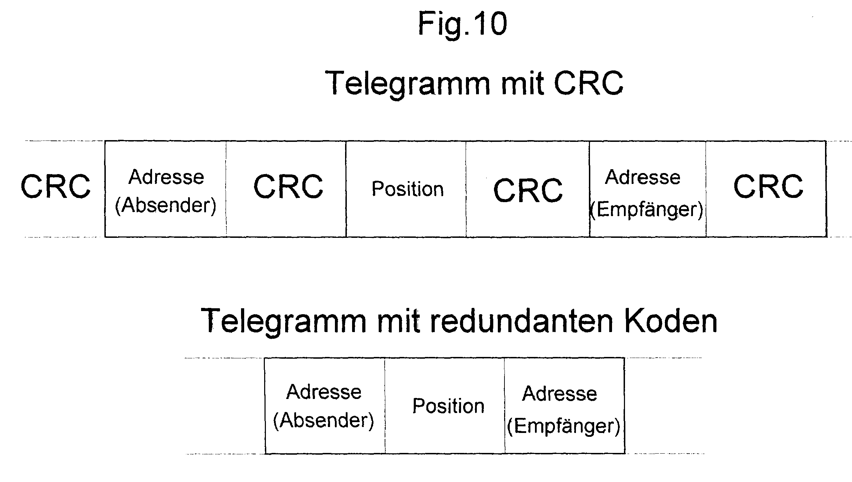

Die Auswerte-Elektronik (Fig. 9) hat einen Lichtwellen-Senderteil (1), welcher ununterbrochen Telegramme mit Adressen- und Positions-Informationen generiert. Beide Teile sind je nach Bedarf mehr oder weniger redundant. (Fig. 10). Die C R C 's (=Cyclic Redundancy Check) erlauben, dass man eine beliebige Hamming-Distanz erreicht. Die gleiche Wirkung erreicht man auch durch die Anwendung von redundanten Koden.
Je nach der Position der mechanischen Teile (Fig. 1) wird das Telegramm bis zum Empfänger (3) durchkommen und wieder in die elektrischen Signale umgewandelt und weiterverarbeitet, oder die Uebertragung der Telegramme wird verhindert, wenn die mechanischen Teile z.B. so stehen wie auf Fig. 8. dargestellt.

Die Elektronik arbeitet mit dynamischen Signalen; auf dem Fail-Safe-Prinzip. Bei einem Bauteildefekt verschwindet die Dynamik des Signals, und der Ausgang schaltet immer auf die sichere Seite d.h. "AUS". Weil der Endteil der Elektronik (4) mit statischen Signalen arbeiten muss (zur Anspeisung der Relais, Schützen, Ventilen usw.), ist dieser Teil zweikanalig (mehrkanalig) ausgeführt und gegenseitig überwacht.(5)

### Bemerkung:

Die unter der Auswerteelektronik beschriebenen Verfahren sind zwar bekannt (z.B. bei Funkfernsteuerungen), aber noch nie, im Zusammenhang mit der Ueberwachung (z.B. der Türposition usw.) und der Wechselfeldintensität in einem Wellenleiter, erwähnt worden.

### Stand der Technik bei Türpositionsüberwachungssystemen

Der Zugang zu den arbeitenden Maschinen, bei welchen gefährdende Bewegungen entstehen, muss verhindert werden. Aus technischen Gründen jedoch z.B. bei Reparaturen, bei Material Zu- und Abfuhr usw. muss der Zugang trotzdem gewährleistet sein, dies aber nur, wenn die gefährdenden Bewegungen stillgesetzt werden können. Lösung dieses Problems bieten Zugangstüren, -Klappen und ähnliche Einrichtungen. Diese werden mit angebauten Schaltern (einem oder sogar zwei) überwacht.
Sind die Türen geschlossen, darf die Maschine laufen. Werden die Türen geöffnet, müssen die gefährdenden Bewegungen der Maschine sofort stillgesetzt werden.(EN 1088)

### Nachteile dieser Methode:

- Ist nur ein Ueberwachungsschalter eingesetzt, kann ein Fehler in der Mechanik (z.B. eine Abnützung der Betätigungsmechanik oder viele andere Fehler) die Abschaffung verhindern.
- Werden zwei Schalter angebracht, ist die Sicherheit zwar besser, aber die Kosten steigen. weil dazu noch eine relativ teure Auswerteelektronik notwendig ist.
- Die Schalter können von aussen leicht manipuliert werden, d.h. dass die Ueberlistung bei den Schaltersystemen relativ einfach ist.

### Stand der Technik bei Fahrbahnend-Ueberwachungsschaltern

Lineare Bewegungen, welche von Rotationsbewegungen (z.B Motoren) abgeleitet sind, müssen vor dem Erreichen der Fahrbahnenden rechtzeitig abgeschaltet werden. Dies kann mit einfachen Schaltern erreicht werden, welche vor dem Ende der Fahrbahn befestigt sind. Bei manchen Einrichtungen, z.B. bei fahrbaren Hubhebebühnen und anderen, ist es Jedoch nicht möglich diese einfache Lösung zu verwirklichen, weil es keine tragenden Konstruktionen gibt, auf welchen man die Schalter befestigen könnte. In solchen Fällen müssen an den Antriebsachsen mechanische Getriebe mit einem geeigneten Zahnräder-Umsetzungsfaktor befestigt werden, welche nach einer bestimmten Zahl der Umdrehungen einen normalen Schalter betätigen. Die Fahrbahnenden werden so nur simuliert. Das Prinzip beruht de facto auf dem mechanischen Zählen der Umdrehungen und einer nachfolgenden Abschaltung.

### Nachteile dieser Methode:

- Die Mechanik ist zwar zuverlässig, jedoch relativ teuer.
- Die Mechanik ist "einkanalig", d.h. bei einer Beschädigung (z.B. gebrochenen Zähnen) wird die Funktion nicht mehr ausgeführt, was unter Umständen fatale Folgen haben könnte.
- Nicht alle Fehler werden rechtzeitig bemerkt.

### Stand der Technik bei Drucktasten/Schaltern/Umschaltern

Die Drucktasten sind dadurch charakterisiert, dass mechanisch angetriebene Kontakte elektrischen Strom schalten.

### Nachteile dieser Methode:

- Beim Schalter entstehen Funken. Deshalb dürfen solche Schalter in ex-geschützten Bereichen nicht benützt werden.
- Die Kontakte bei stärkeren Strömen brennen ab, was die Zuverlässigkeit beeinflusst.
- Die Mechanik der beweglichen Teile unterliegt den Ermüdungserscheinungen
- Nicht alle Fehlerwerden rechtzeitig bemerkt.

### Vorteile der Erfindung gegenüber dem Stand der Technik bei Türpositionsüberwachungen. Fahrbahnend-Ueberwachungsschaltern und Drucktasten

Anstelle von elektrischen Strömen, welche in den normalen Kupferleitern geführt und mit üblichen Schaltern geschaltet sind, benützt man als Medium elektromagnetische Wellen z.B. Lichtwellen, welche in einem (Licht-)Wellenleiter konzentriert geführt sind. Die Ein- bzw. Ausschaltung erreicht man dadurch, dass die Teil-Wellenleiter entweder gegenseitig koaxial positioniert oder verschoben sind.
Gegenüber den unter dem "Stand der Technik" aufgeführten Nachteilen weist diese Methode die folgenden **Vorteile** auf:
- Von aussen kommende Störungen (z.B. fremde eletromagnetische Felder usw.) können sich nicht störend auswirken. Hohe EMV.
- Weil keine Kontakte mit Funken vorhanden sind, ist die Anwendung im Ex-Schutzbereich möglich.
- Weil keine Kontakte mit Funken vorhanden sind, kann keine Abnützung (Abbrennung) stattfinden.
- Weil die (Licht-)Wellenleiterstücke in Ausbohrungen, bzw. Ausfräsungen eingelegt werden, kann man sie als integrierte Teile der bereits vorhandenen Bauelemente (z.B. Türscharniere, Motorachsen) betrachten, was sich besonders auf den Preis günstig auswirkt. (Türpositionsüberwachung, Fig. 2 bis 5). Im Falle der Fahrbahnend-Ueberwachung lässt sich ein (Licht-)Wellenleiter in eine radiale Bohrung der rotierenden Achse des Antriebs einlegen. (Fig. 6 und 8). Die Auswerteelektronik muss zusätzlich noch als Zähler programmiert werden.
- Weil keine Schalter nach aussen sichtbar und aussen montiert sind, und weil die "Schaltungen" der (Licht-)wellen im Inneren passieren, ist eine Ueberlistung kaum möglich. Verschmutzung der Uebergänge zwischen zwei Teillichtwellenleitern verursacht eine Abschaltung. (Also geht auf die sichere Seite).
- Weil die Auswerteelektronik zweikanalig und mit Mikroprozessoren ausgestattet ist, kann nicht nur der Zustand (z.B. der Türe: geschlossen x offen), sondern auch die Ursprungsadresse (z.B. Türe Nr.1, 2...n) im Telegramm dargestellt werden. (Fig. 10) Bei komplexen Systemen mit Bussen kann dem Telegramm auch eine Bestimmungsadresse angehängt werden.
- Weil die Informationsdarstellung beliebig redundant gestaltbar ist (Frage der Software), kann die Sicherheit der Uebertragung den Anforderungen entsprechend ausgeführt werden.
- Wenn die Elektronik direkt an einen geeigneten Bus angeschlossen wird, müssen keine Relais mit zwangsgeführten Kontakten zwischengeschaltet werden.

| **Verzeichnis der Zeichnungen** | |
|---|---|
| Zeichnung Nr. | Bezeichnung |
| 1 | Grundprinzip |
| 2 bis 5 | Manche Lösungsvarianten mit einem bügelformigen Lichtwellenleiter-Zwischenstück |
| 6 bis 8 | Lösungsvarianten mit einem geradelinigen Lichtwellenleiter-Zwischenstück |
| 9 | Schaltschema |
| 10 | Telegrammaufbau |
| 11 | Beispiel 1 (Einbau im Scharnier) |
| 12 | Beispiel 2 (Einbau im Riegelbolzen) |

## Patentansprüche

1. Vorrichtung, welche in der Sicherheitstechnik oder Ueberwachungstechnik, zum Feststellen einer absoluten oder relativen Position von zwei oder mehreren mechanischen Teilen, eingesetzt wird, bzw. zum Feststellen der Differenz der Umdrehungen zwischen diesen mechanischen Teilen, ist
**dadurch gekennzeichnet, dass**
als Medium elektromagnetische Wellen (z.B. Lichtwellen) benutzt werden, welche im (Licht-) Wellenleiter konzentriert im Inneren der Teile geführt sind. Der Durchfluss der Wellen ist gewährleistet, wenn in den eingelegten Teilen alle Enden der Teilwellenleiterstücke koaxial gegeneinander stehen (dies wird als EIN betrachtet) oder es gibt einen Unterbruch, wenn die Achsen der Teilwellenleiterstücke um mehr als deren Durchmesser auseinanderliegen (AUS-Zustand).

2. Vorrichtung nach Anspruch 1 ist
**dadurch gekennzeichnet, dass**
eine zwangsläufige Unterbrechung der im Wellenleiter geführten Wellen (also eine besonders sichere Unterbrechung) erfolgt.

3. Vorrichtung nach Anspruch 1 und 2 ist
**dadurch gekennzeichnet, dass**
durch die konzentrierte Leitung der Wellen im Wellenleiter die Wahrscheinlichkeit der Auswirkung, der von aussenkommenden Störungen oder eine einfache Ueberlistung praktisch unmöglich ist.

4. Vorrichtung nach Anspruch 1 bis 3 ist
**dadurch gekennzeichnet, dass**
die relativen Bewegungen, oder die absolute Position der Teile mit Wellenleitern abgefragt, bzw. erkannt wird.

5. Vorrichtung nach Anspruch 1 bis 4 ist
**dadurch gekennzeichnet, dass**
durch die "Schaltung" der Wellen und nicht des elektrischen Stroms, solche "Wellenschalter" im ex-geschützten Bereich angewandt werden können.

6. Vorrichtung nach Anspruch 1 bis 5 ist
**dadurch gekennzeichnet, dass**
die, in der angewandten Auswerteelektronik entstandenen Fehler, je nach der Schaltungsarchitektur, entweder unmittelbar zum sicheren Abschalten führen (Fail-Safe-Prinzip), oder trotz entstandenen Fehlern die nächste Abschaltung ausgeführt, und dank der Fehlerdetektion die nächste Einschaltung des Freigabe-Kreises nicht möglich wird. ((Bei einer zwei- eventuell mehrkanaligen Auswerteelektronik).

7. Vorrichtung nach Anspruch 1 bis 6 ist
**dadurch gekennzeichnet, dass**
durch die geeignete Modulation der Welle sich auch andere Daten übertragen lassen (z.B. Telegramme mit der Ursprungs- und den Zieladressen).

8. Vorrichtung nach Anspruch 1 bis 7 ist
**dadurch gekennzeichnet, dass**
durch geeignete Redundanz in der Hardware, Software,bzw. Codes eine (fast beliebig) erweiterbare Sicherheit in der Informationsübertragung erreichbar ist.
